# EUROPÄISCHE PATENTSCHRIFT

(11) **EP 2 388 055 B1**
(45) Veröffentlichungstag und Bekanntmachung des Hinweises auf die Patenterteilung: **27.09.2017**
(21) Anmeldenummer: 11002859.4
(22) Anmeldetag: 06.04.2011
(51) Int. Cl.: B01D 25/164, B01D 25/21, B01D 25/28, B01D 25/30

(54) **FILTERPRESSE**
FILTER PRESS
FILTRE-PRESSE

(30) Priorität: 21.05.2010 AT 8352010
(43) Veröffentlichungstag der Anmeldung: 23.11.2011
(73) Patentinhaber: Andritz Technology and Asset Management GmbH, 8045 Graz (AT)
(72) Erfinder: Lange, Klaus Jürgen, 95100 Selb (DE); Paschedag, Thomas, 95182 Döhlau (DE); Scharnagl, Reinhard, 95666 Mitterteich (DE)
(74) Vertreter: Schweinzer, Friedrich

(56) Entgegenhaltungen:
- EP-A1- 0 162 998
- EP-A1- 0 419 931
- DE-A1-102007 037 317
- FR-A1- 2 586 360
- JP-A- 62 155 909

## Beschreibung

Die Erfindung betrifft eine Filterpresse mit mehreren Filterelementen, wobei jeweils zwei Membranfilterelemente mit einem dazwischen liegenden Kammerfilterelement randseitig dichtend aneinandergefügt sind und zwischen Kammerfilterelement und Membranfilterelement Filterkammern bilden, in die eine Einlauföffnung für die über das Kammerfilterelement zugeführte, zu filtrierende Suspension mündet, wobei eine Zulauföffnung für die zu entwässernde Suspension in das Kammerfilterelement vorgesehen ist, wobei im Kammerfilterelement ein freier Einlassquerschnitt von der Zulauföffnung bis in die beidseitig angeordneten Filterkammern vorgesehen ist, wobei die im Kammerfilterelement durch den freien Einlassquerschnitt gebildete Kammer an ihrem einen Ende zur Mitte des Kammerfilterelementes hin durch einen mit einer beidseitigen Schräge, zur Umlenkung der Suspension in die Filterkammer, versehenen Plattenkörper abgeschlossen ist. Bei Filterpressen dieser Art wird mit elastischen Membranen gearbeitet, die mit einem Filtertuch abgedeckt sind, wobei die zu filtrierende Suspension in die Filterkammer und gegen das Filtertuch gepresst wird. Unter "Membran" wird im Folgenden ein flexibles und impermeables Flächenelement verstanden. Das zwischen Filtertuch und Membran befindliche Filtrat wird in weiterer Folge abgeführt und der Filterkuchen verbleibt in der Filterkammer. Zur Entfeuchtung des Filterkuchens wird in der Regel zwischen Stützplatte und Membran ein Überdruck angelegt, der die Membran in die Filterkammer wölbt und sie somit auf den Filterkuchen drückt. Dadurch wird Restfeuchtigkeit aus dem Filterkuchen entfernt.

Eine Schwierigkeit ergibt sich dabei im Bereich der Einlauföffnung zur Filterkammer. Die Einlauföffnung ist prinzipiell ausreichend groß zu wählen, um eine rasche Befüllung der Filterkammer mit der zu filtrierenden Suspension zu ermöglichen. Dabei entsteht aber die Gefahr einer Überdehnung der Membran im Bereich der Einlauföffnung während der Pressphase und somit einer starken, lokalen Materialbeanspruchung der Membran.

Weiters sind beim Befüllen der Kammern auch die Befüllkanäle mit Schlamm gefüllt. Beim nachfolgenden Membranpressen kommt es dabei im Eintrittsbereich des Schlammes in die Kammer ebenfalls zur Verdichtung des Kuchens, welche sich bis in den vertikalen Zulaufbereich fortsetzt. Ein derart verdichteter Kuchen in diesem Bereich kann schwer bis gar nicht entfernt werden. Wenn im nächsten Schritt die Kammern wieder gefüllt werden sollen, gelingt dies nicht, langsamer oder ungleichförmig, was problematisch ist. Außerdem führt dies zu ungleicher Füllung der einzelnen Kammern durch Verdichtung des Feststoffes im Einlaufspalt zur Filterkammer beim Nachpressen, wobei bei der Kuchenentleerung teilweise die Einläufe verstopft bleiben. Bei der Wiederbeschickung werden die Kammern mit den verstopften Einläufen nicht bzw. nicht ausreichend gefüllt, sodass es zwischen den einzelnen Kammern zu Differenzdrücken mit der Folge von Plattenbrüchen kommt.

Ziel der Erfindung ist es, ein System zu schaffen, bei dem eine während der Membranpressung erfolgende Kuchenkomprimierung im Einlaufbereich derart minimiert wird, dass die im Einlaufbereich vorliegende Suspension anschließend noch hydraulisch beweglich ist, d.h. den Kanal nicht verstopft. Aus der JP 62155909 ist bekannt, dass Kammerfilterelemente u.a. einen freien Einlassquerschnitt und umlenkende Einbauten aufweisen.

Dadurch dass im Kammerfilterelement ein freier Einlassquerschnitt von der Einlauföffnung bis in die beidseitig angeordneten Filterkammern vorgesehen ist, wobei die im Kammerfilterelement durch den freien Einlassquerschnitt gebildete Kammer an ihrem einen Ende durch einen mit einer beidseitigen Schräge versehenen Plattenkörper abgeschlossen ist kann sich der im vertikalen Zulaufbereich stehende Schlamm während der Membranverdichtung nicht gegen die "Filterplattenseele" abstützen, sondern es wird lediglich Kuchen gegeneinander (von beiden Seiten mit jeweils einer Membran) verdichtet,wodurch der Schlamm hydraulisch bleibt, d.h. er kann bei der neuerlichen Beschickung in die Filterkammer gedrückt werden und blockiert somit nicht den Zulauf. Damit dieses Ausbringen des etwas verdichteten Schlamms jedoch immer noch hydraulisch beweglichen Schlammes noch besser gelingt, können vorteilhafterweise zusätzlich Schrägen (sogenannte Entformschrägen) vorgesehen sein, die den Kuchen gerichtet aus dem vertikalen Kanal in die Kammer gleiten lassen.

Um Überdehnungen der Membran im Bereich der Einlauföffnung während der Pressphase zu vermeiden, ist erfindungsgemäß eine Abdeckplatte um die Einlauföffnung angeordnet. Wenn die Einlauföffnung in mehrere, beispielsweise zwei Öffnungen aufgeteilt ist, lässt sich eine noch bessere Abstützung der Membran erzielen.

Vorteilhaft hat sich erwiesen, wenn die Abdeckplatte angeschrägt ist. Dadurch werden allfällige scharfe Kanten vermieden, die eine Beschädigung der Membran bewirken könnten.

Die Erfindung wird nun anhand der Zeichnungen beispielhaft beschrieben, wobei
Fig. 1 ein Kammerfilterelement nach dem Stand der Technik,
Fig. 2 einen Schnitt gemäß Linie II-II in Fig. 1 durch die Einlauföffnung nach dem Stand der Technik,
Fig. 3 ein erfindungsgemäßes Kammerfilterelement,
Fig. 4 einen Schnitt gemäß Linie IV-IV in Fig. 3 und
Fig. 5 einen Schnitt durch die Kombination von Membranfilterelementen mit Kammerfilterelement darstellt.

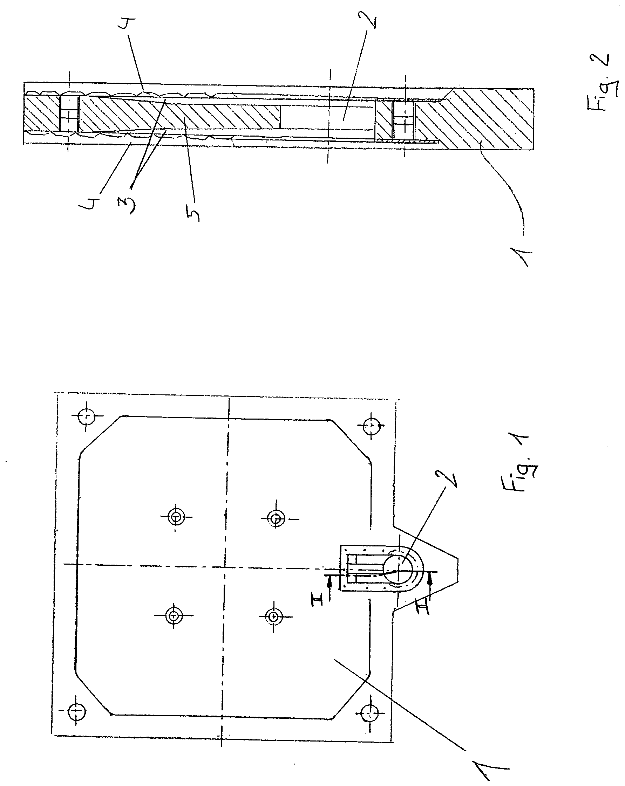

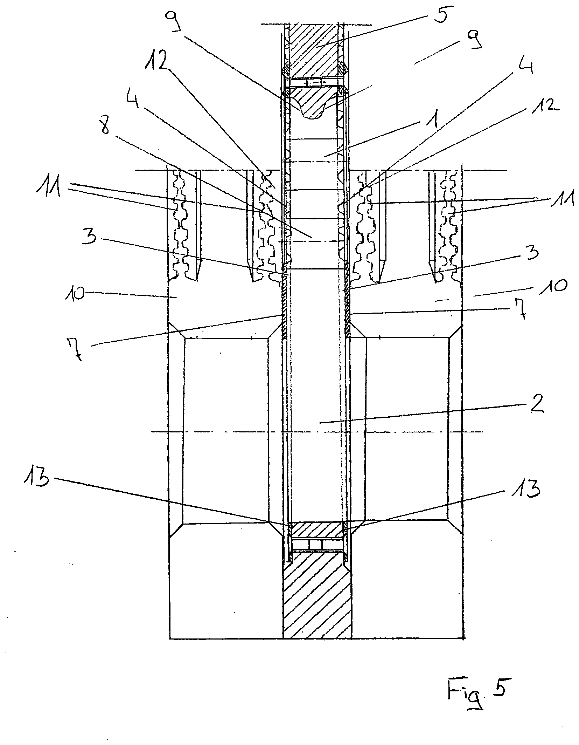

Fig. 1 zeigt ein Kammerfilterelement 1 nach dem Stand der Technik, wobei hier die Zulauföffnung 2 für die zu entwässernde Suspension erkennbar ist. Dieses Kammerfilterelement 1 schließt in einer Filterpresse an ein Membranfilterelement (Pos. 10 in Fig. 5) an und dient im Wesentlichen zur Zuführung der Suspension in die Filterkammer.

In Fig. 2 ist dann ein Schnitt II-II durch den Einlaufbereich des Kammerfilterelements 1 zu sehen. Die Zulauföffnung 2 mündet in beidseitig angeordnete Einlaufspalte 3, die wiederum in beidseitig des Kammerfilterelements 1 angeordnete Einlauföffnungen 4 münden, durch die die Suspension in die Filterkammer (Pos. 12 in Fig. 5) zwischen Kammerfilterelement 1 und Membranfilterelement (Pos. 10 in Fig. 5) geführt wird. Die Einlaufspalte 3 werden zur Mitte des Kammerfilterelementes 1 hin durch den Plattenkörper 5 begrenzt. Die Einlaufspalte 3 zu den Einlauföffnungen 4 sind sehr schmal und begrenzen damit den Durchfluss der Suspension in die Filterkammer (Pos. 12 in Fig. 5).

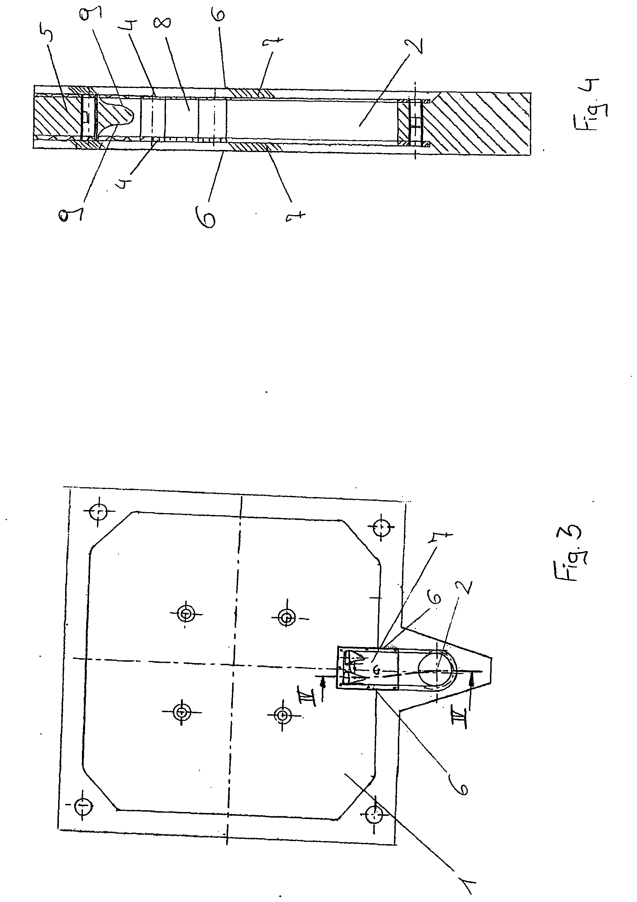

Fig. 3 zeigt nun ein erfindungsgemäßes Kammerfilterelement 1 mit der Zulauföffnung 2. Weiters ist hier erkennbar, dass die Einlauföffnung 4 nunmehr aus zwei Öffnungen 6 besteht, die in einer Abdeckplatte 7 angeordnet sind, wobei die Abdeckplatte 7 die Einlauföffnung 4 der Suspension in die Filterkammer (Pos. 12 in Fig. 5) abdeckt.

Fig. 4 zeigt einen Schnitt IV-IV in Fig. 3 des erfindungsgemäßen Kammerfilterelements 1, der der Fig. 2 gemäß dem Stand der Technik entspricht. Man erkennt hier wieder die Zulauföffnung 2, die in einen großen freien Einlassquerschnitt 8 mündet. Dieser Einlassquerschnitt 8 reicht nunmehr bis zu den beidseitig angeordneten Einlauföffnungen 4, da hier im Bereich des Einlaufes in die Filterkammer (Pos. 12 in Fig. 5) kein Plattenkörper 5 vorhanden ist. Das Ende des Plattenkörpers 5 im Bereich der Einlauföffnungen 4 in die Filterkammern (Pos. 12 in Fig. 5) liegt nun weit von der Zulauföffnung 2 entfernt und weist zusätzlich Schrägen 9 auf, die eine gute Umlenkung der Suspension in die Filterkammer (Pos. 12) ermöglichen. Über den Einlauföffnungen 4 sind beidseitig Abdeckplatten 7 angeordnet, die Öffnungen 6 aufweisen. Durch diese Abdeckplatten 7 wird die Membran (Pos. 11 in Fig. 5) stabilisiert und verhindert, dass sich diese unzulässig in die Einlauföffnung 4 hinein biegen lässt. Dies verringert die Gefahr von Beschädigungen der Membran (Pos. 11 in Fig. 5) wesentlich. Durch die Aufteilung der Einlauföffnung 4 in z.B. zwei Öffnungen 6 der Abdeckplatte 7 kann eine weitere Stabilisierung erreicht werden. Durch die Abdeckplatte 7 wird zusätzlich das an der Membranoberfläche angebrachte und in die Zulauföffnung 2 reichende Filtertuch geklemmt und somit auch die Filterkammer 12 gegen die Zulauföffnung 2 abgedichtet. Da die Membran nun nicht mehr beziehungsweise deutlich reduziert in den Einlassquerschnitt 8 hinein gedrückt werden kann, kann auch die Suspension nicht so komprimiert werden, dass sie zu stark verdichtet wird. Somit bleibt die Suspension auch während des Pressvorgangs im Bereich der Einlauföffnung 4 immer fließfähig und kann damit auch den Einlassquerschnitt 8 nicht verstopfen und gewährleistet damit den weiteren Durchgang der Suspension.

In Fig. 5 ist die Kombination von zwei Membranfilterelementen 10 mit einem Kammerfilterelement 1 dargestellt. Hierbei weist jedes Membranfilterelement 10 beidseitig eine Membran 11 auf. Zwischen den Membranen 11 und dem Kammerfilterelement 1 werden Filterkammern 12 gebildet. Weiters wird ein Filtertuch am Kammerfilterelement 1 mittels einer Klemmplatte 13, die als Rahmen ausgeführt ist und sich um die Zulauföffnung 2 einerseits und die Einlauföffnung 4 andererseits erstreckt an das Kammerfilterelement 1 geklemmt. Dadurch bleibt der Bereich der Zulauföffnung 2 einerseits und der Einlauföffnung 4 andererseits für den Suspensionsfluss frei. Die Klemmplatte 13 kann dabei aus Metall oder z.B. Kunststoff bestehen. Die übrigen Positionen entsprechen jenen der vorherigen Figuren.

Mit den vorgeschlagenen Maßnahmen kann somit erreicht werden, dass die bisher im Stand der Technik vorkommenden Verstopfungen des Einlaufes sowie auch die mangelnde Füllung der Kammern und damit reduzierter Durchsatzleistung in weiteren Presszyklen vermieden werden kann. Dies führt zu konstanten Durchsätzen und längeren Standzeiten der Membranfilterelemente, was wiederum zu geringeren Stillstandszeiten der Filterpresse führt.

## Patentansprüche

1. Filterpresse mit mehreren Filterelementen, wobei jeweils zwei Membranfilterelemente (10) mit einem dazwischen liegenden Kammerfilterelement (1) randseitig dichtend aneinandergefügt sind und zwischen Kammerfilterelement (1) und Membranfilterelement (10) Filterkammern (12) bilden, in die eine Einlauföffnung (4) für die über das Kammerfilterelement (1) zugeführte, zu filtrierende Suspension mündet, wobei eine Zulauföffnung (2) für die zu entwässernde Suspension in das Kammerfilterelement (1) vorgesehen ist, wobei im Kammerfilterelement (1) ein freier Einlassquerschnitt (8) von der Zulauföffnung (2) bis in die beidseitig angeordneten Filterkammern (12) vorgesehen ist, wobei die im Kammerfilterelement (1) durch den freien Einlassquerschnitt (8) gebildete Kammer an ihrem einen Ende zur Mitte des Kammerfilterelementes (1) hin durch einen mit einer beidseitigen Schräge (9), zur Umlenkung der Suspension in die Filterkammer (12), versehenen Plattenkörper (5) abgeschlossen ist , **dadurch gekennzeichnet, dass** eine Abdeckplatte (7) um die Einlauföffnung (4) angeordnet ist, wobei die Einlauföffnung (4) in mehrere, beispielsweise zwei Öffnungen (6) aufgeteilt ist.

2. Filterpresse nach Anspruch 1, **dadurch gekennzeichnet, dass** die Abdeckplatte (7) angeschrägt ist.

3. Filterpresse nach Anspruch 1 oder 2, **dadurch gekennzeichnet, dass** die Abdeckplatte (7) aus Metall oder aus Kunststoff besteht.

4. Filterpresse nach einem der Ansprüche 1 bis 3, **dadurch gekennzeichnet, dass** die Zulauföffnung (2) am unteren Ende des Kammerfilterelements (1) bzw. Membranfilterelements (10), an deren oberen Ende oder in einer Ecke der Elemente (1, 10) angeordnet ist.

## Claims

1. Filter press with several filter elements, where each two membrane filter elements (10) with a chamber filter element in between (1) are joined to one another with sealed edges and form filter chambers (12) between the chamber filter element (1) and the membrane filter element (10) into which an inlet opening (4) leads for the suspension fed in through the chamber filter element (1) and which is to be filtered, where a feed opening (2) to the chamber filter element (1) is provided for the suspension to be dewatered, where an open inlet cross-section (8) from the feed opening (2) to the filter chambers (12) arranged on either side is provided in the chamber filter element (1), where the chamber formed in the chamber filter element (1) by the open inlet cross-section (8) is closed off at one of its ends up to the middle of the chamber filter element (1) by a plate element (5) that is slanted at both sides in order to deflect the suspension into the filter chamber (12), **characterized in that** a cover plate (7) is placed round the inlet opening (4), where the inlet opening (4) is divided into several openings (6), for example two.

2. Filter press according to Claim 1, **characterised in that** the cover plate (7) is slanted.

3. Filter press according to Claim 1 or 2, **characterised in that** the cover plate (7) is made of metal or plastic.

4. Filter press according to one of Claims 1 to 3, **characterised in that** the feed opening (2) at the lower end of the chamber filter element (1) or membrane filter element (10), respectively, is arranged at its upper end or in a corner of the elements (1, 10).

## Revendications

1. Filtre-presse comprenant plusieurs éléments de filtre, deux éléments (10) de filtre-membrane avec un élément (1) de filtre à chambre disposé entre eux, étant respectivement assemblés à étanchéité l'un à l'autre sur le bord et formant entre l'élément (1) de filtre à chambre et l'élément (10) de filtre-membrane des chambres (12) de filtre, dans lesquelles débouche un orifice (4) d'admission pour la suspension à filtrer acheminée au moyen de l'élément (1) de filtre à chambre, un orifice (2) d'alimentation étant situé dans l'élément (1) de filtre à chambre pour la suspension à assécher, dans l'élément (1) de filtre à chambre une section transversale (8) d'entrée libre étant située à partir de l'orifice (2) d'alimentation jusque dans les chambres (12) de filtre disposées de chaque côté, la chambre formée dans l'élément (1) de filtre à chambre par la section transversale (8) d'entrée libre étant raccordée à une de ses extrémités vers le centre de l'élément (1) de filtre à chambre au moyen d'un corps (5) de plaque pourvu d'une inclinaison (9) de chaque côté, servant à dévier la suspension dans la chambre (12) de filtre, **caractérisé en ce qu'**une plaque (7) de recouvrement est disposée autour de l'orifice (4) d'admission, l'orifice (4) d'admission étant divisé en plusieurs orifices, par exemple deux orifices (6).

2. Filtre-presse selon la revendication 1, **caractérisé en ce que** la plaque (7) de recouvrement est biseautée.

3. Filtre-presse selon la revendication 1 ou 2, **caractérisé en ce que** la plaque (7) de recouvrement est constituée de métal ou de matière plastique.

4. Filtre-presse selon l'une quelconque des revendications 1 à 3, **caractérisé en ce que** l'orifice (2) d'alimentation est disposé à une extrémité inférieure de l'élément (1) de filtre à chambre ou sur l'élément (10) de filtre-membrane, sur son extrémité supérieure ou dans un angle des éléments (1, 10).
